Europäisches Patentamt

European Patent Office

Office européen des brevets

(11) Veröffentlichungsnummer: **0 383 102**
**A1**

(12) **EUROPÄISCHE PATENTANMELDUNG**

(21) Anmeldenummer: 90101957.0

(22) Anmeldetag: 01.02.90

(51) Int. Cl.⁵: **C07F 9/165, C08K 5/51**

(30) Priorität: 14.02.89 DE 3904290
22.12.89 DE 3942464

(43) Veröffentlichungstag der Anmeldung:
22.08.90 Patentblatt 90/34

(84) Benannte Vertragsstaaten:
**DE FR GB IT NL**

(71) Anmelder: **BAYER AG**

**D-5090 Leverkusen 1 Bayerwerk(DE)**

(72) Erfinder: **Schubart, Rüdiger, Dr.**
**An der Engelsfuhr 27**
**D-5060 Bergisch Gladbach 2(DE)**
Erfinder: **Engels, Hans-Wilhelm, Dr.**
**Dickeicherfeld 12**
**D-5014 Kerpen 3(DE)**

(54) **Verfahren zur Herstellung von Bis(dialkoxy-thiophosphoryl)-trisulfiden.**

(57) Die Schwefelabspaltung aus Bis(dialkoxy-thio-phosphoryl)-tetrasulfiden zu Bis(dialkoxy-thio-phosphoryl)-trisulfiden verläuft an Natriumalumi-niumsilikat bzw. an Füllstoffen, die mit Alkalihydroxid und/oder Erdalkalihydroxid behandelt worden sind, aus der Reihe Silikate, Ruß und Aluminiumoxid na-hezu quantitativ.

EP 0 383 102 A1

## Verfahren zur Herstellung von Bis(dialkoxy-thiophosphoryl)-trisulfiden

Die Erfindung betrifft ein Verfahren zur Herstellung von Bis(dialkoxy-thiophosphoryl)-trisulfiden (nachfolgend: "P-S$_3$") durch Schwefelabspaltung aus Bis(dialkoxy-thiophosphoryl)-tetrasulfiden (nachfolgend: "P-S$_4$") an Natriumaluminiumsilikat bzw. an Füllstoffen, die mit Alkali- und/oder Erdalkalihydroxid behandelt worden sind, aus der Reihe Silikate, Ruß und Aluminiumoxid.

Die Verwendung von P-S$_4$ und - vorzugsweise - von P-S$_3$ als Schwefelspender bzw. als Ultrabeschleuniger bei der Kautschukvulkanisation ist bekannt (DE-OS 19 36 694 und 22 49 090). Die Herstellung dieser Verbindungen kann nach dieser Literatur durch Umsetzung von Dialkyldithiophosphorsäure mit Schwefeldichlorid (SCl$_2$, Dichlorsulfan) zu P-S$_3$ bzw. mit Schwefelmonochlorid (S$_2$Cl$_2$, Dichlordisulfan) zu P-S$_4$, gegebenenfalls in Gegenwart einer Base wie Natriumhydroxid, gegebenenfalls in einem organischen Lösungsmittel erfolgen.

Schwefeldichlorid disproportioniert leicht zu Schwefelmonochlorid und Chlor, so daß man einerseits die Gegenwart des aggressiven Chlors berücksichtigen muß und andererseits unter Reaktionsbedingungen immer eine partielle Disproportionierung des Schwefeldichlorids eintritt und deswegen neben dem gewünschten P-S$_3$ auch das wegen seiner geringeren Aktivität weniger geschätzte P-S$_4$ entsteht.

Überraschenderweise wurde nun gefunden, daß P-S$_4$ in Gegenwart von Natriumaluminiumsilikat und/oder mit Alkalihydroxid und/oder Erdalkalihydroxid behandelten Füllstoffen Schwefel abspaltet und in P-S$_3$ übergeht. Diese Erkenntnis läßt sich auf zweierlei Weise nutzen: Zum einen ermöglicht sie, sofern die Synthese mit Schwefeldichlorid durchgeführt worden ist, die Verarbeitung des mit P-S$_4$ durchsetzten P-S$_3$ zu reinem P-S$_3$; zum anderen bietet sie die Möglichkeit, unter Verwendung des angenehmeren Schwefelmonochlorids P-S$_4$ als Zwischenstufe zu synthetisieren und diese anschließend durch Schwefelabspaltung quantitativ in das gewünschte P-S$_3$ zu überführen.

Gegenstand der Erfindung ist also ein Verfahren zur Herstellung von Bis(di-C$_1$-C$_6$-alkoxy-thiophosphoryl)-trisulfiden aus Bis(di-C$_1$-C$_6$-alkoxy-thiophosphoryl)-tetrasulfiden durch Schwefelabspaltung an Natriumaluminiumsilikat bzw. an mit Alkalihydroxid und/oder Erdalkalihydroxid behandeltem Füllstoff aus der Reihe Silikate, Ruß und Aluminiumoxid.

Bevorzugte Ausgangs- bzw. Endprodukte sind solche, in denen "alkoxy" für Methoxy, Ethoxy, n- und iso-Propoxy, ·n-, sek.- und iso-Butoxy, n-Hexoxy, Cyclohexoxy steht, die wichtigste Bedeutung ist Ethoxy.

Bevorzugte Natriumaluminiumsilikate enthalten, bezogen auf das bei 105°C getrocknete Produkt, mindestens 3 Gew.-% Na$_2$O, mindestens 3 Gew.-% Al$_2$O$_3$ und mindestens 60 Gew.-% SiO$_2$ nach DIN 55 921/2, vorzugsweise 6 bis 8 Gew.-% Na$_2$O, 6 bis 8 Gew.-% Al$_2$O$_3$ und mindestens 75 Gew.-% SiO$_2$. Sie besitzen eine BET-Oberfläche von 60 bis 70 m$^2$/g und einen pH-Wert nach DIN 53 200) von 10 bis 12. Ein bevorzugtes derartiges Natriumaluminiumsilikat ist beispielsweise unter der Handelsbezeichnung ®Vulkasil Al (Bayer AG, Leverkusen) erhältlich.

Für das erfindungsgemäße Verfahren geeignete Füllstoffe umfassen die in der DE-OS 22 49 090 genannten Silikate, wie Calciumsilikat, Aluminiumsilikat, Magnesiumsilikat, Siliciumdioxid, Ruße und Aluminiumoxide, sofern sie mit Alkali- und/oder Erdalkalihydroxid behandelt worden sind.

Die spezifischen Oberflächen für besonders bevorzugte Silikatfüllstoffe betragen 300 bis 650 m$^2$/g, für besonders bevorzugte Ruße 5 bis 250 m$^2$/g und für besonders bevorzugte Aluminiumoxide 100 bis 250 m$^2$/g.

Eine empfehlenswerte Methode zur Herstellung von P-S$_4$ geht zunächst von hosphorpentasulfid und einem einwertigen Alkohol aus. Am Beispiel der Diethoxyverbindung wird das Verfahren nachstehend erläutert.

Bei einer Temperatur zwischen 20 und 80°C wird Phosphorpentasulfid mit der äquivalenten Menge oder einem Überschuß bis zu 0,1 Äquivalent Ethanol in einem inerten, mit Wasser nicht mischbaren organischen Lösungsmittel, z.B. Toluol oder auch der rohen Diethyldithiophosphorsäure, zur rohen Diethyldithiophosphorsäure umgesetzt und diese durch Neutralisation mit wäßriger Natronlauge in Gegenwart von 1 bis 5 Gew.-% Schwefel, bezogen auf eingesetztes Phosphorpentasulfid, in das entsprechende Natriumsalz übergeführt (der Schwefel dient zur Sulfierung evtl. entstandener Nebenprodukte). Die organische Phase wird abgetrennt und die wäßrige Phase wird - vorzugsweise in Abwesenheit von organischem Lösungsmittel - bei einer Temperatur unter 40°C, vorzugsweise bei etwa 10 bis 2°C, mit Schwefelmonochlorid versetzt, worauf das P-S$_4$ in guter Ausbeute anfällt. Das in Wasser unlösliche P-S$_4$ wird zur Abtrennung von der wäßrigen Phase am besten auf eine Temperatur über seinem Schmelzpunkt (44 bis 45°C), z.B. auf 45 bis 50°C, erhitzt und in geschmolzener Form von der wäßrigen Phase, die das entstandene Kochsalz enthält, durch Abnehmen der Phase getrennt. Das flüssige P-S$_4$ kann im Vakuum, vorzugsweise bei 50 bis 55°C, ge-

trocknet werden.

Das P-S$_4$ kann mit dem Füllstoff auf jedem geeigneten Mischaggregat, wie z.B. einem Pulvermischer, einer Schneckenmaschine oder in einem Wirbelbett gemischt werden. Das Mischungsverhältnis kann in weiten Bereichen schwanken und beträgt im allgemeinen 3 bis 100, vorzugsweise 34 bis 60 Gew.-% Füllstoff, bezogen auf eingesetztes P-S$_4$; zur Herstellung des Hydroxid-behandelten Füllstoffs wird im allgemeinen eine wäßrige Lösung des Alkalihydroxides bzw. des Erdalkalihydroxides hergestellt, in der der Füllstoff suspendiert wird. Diese Suspension wird im Vakuum eingedampft und bei erhöhter Temperatur, z.B. bei 100°C, getrocknet. Nach Pulverisieren in einem geeigneten Gerät ist der so behandelte Füllstoff für die Überführung des P-S$_4$ in P-S$_3$ einsatzbereit.

Im allgemeinen wird ein Bereich von 0,1 bis 20 g, vorzugsweise 0,1 bis 10 g, insbesondere 0,5 bis 5 g Alkalihydroxid und/oder Erdalkalihydroxid (in ausreichender Menge Wasser gelöst) pro 100 g Füllstoff ausreichen.

Bevorzugt werden Natrium- und Kaliumhydroxid sowie Calciumhydroxid.

Das P-S$_4$ liegt vor dem Mischvorgang evtl. in flüssiger Form vor, weil es wegen Kristallisationsverzögerung zur Bildung unterkühlter Schmelzen neigt.

Für das erfindungsgemäße Verfahren läßt man die Mischung aus P-S$_4$ und dem Füllstoff vorzugsweise bei 10 bis 45°C, insbesondere bei 10 bis 30°C, stehen, bis die Umsetzung des P-S$_4$, gemessen am Verhältnis verbliebenes/ursprüngliches P-S$_4$, mindestens 95, vorzugsweise mindestens 98, insbesondere mindestens 99 % beträgt. Bei der Diethoxyverbindung ist dieses Ziel in der Regel nach etwa 6 Tagen (bei Raumtemperatur) erreicht, wenn man auf 70 Gew.-Teile P-S$_4$ 30 Gew.-Teile Füllstoffs eingesetzt hat. Vermindert man den Anteil des Füllstoffs an der gesamten Mischung, so verlängert sich die Reaktionszeit. Erhöht man den Anteil des Füllstoffs oder auch noch die Menge des Alkali-und/oder Erdalkalihydroxids, so verkürzt sich die Reaktionszeit und umgekehrt.

Für die praktische Anwendung ist es oft wünschenswert, das P-S$_3$ in Form von Pillen oder von Stranggranulat einzusetzen. Die Gestaltung dieser äußeren Form kann sowohl anschließend an den Mischvorgang vor der zwecks Schwefelabspaltung stattfindenden Lagerung als auch nach erfolgter Reaktion zum P-S$_3$ erfolgen.

Das durch das erfindungsgemäße Verfahren erhaltene Gemisch aus (i) P-S$_3$, (ii) Füllstoff und (iii) Schwefel kann für die Kautschukvulkanisation unter Verzicht auf eine Abtrennung der Produkte (ii) und (iii) eingesetzt werden. Selbstverständlich kann das P-S$_3$ auch mit einem geeigneten organischen Lösungsmittel, z.B. mit Toluol oder Dichlormethan aus diesem Gemisch herausgelöst werden.

Beispiele

Herstellung von P-S$_4$

Zu 444 g Phosphorpentasulfid in 300 ml Toluol tropfte man unter Rühren und unter Kühlung 400 g Ethanol. Nach Ende des Zutropfens steigerte man die Temperatur in Schritten von je 10°C auf 80°C. Nach Beendigung der Schwefelwasserstoffentwicklung wurde die Reaktionsmischung auf 10 bis 20°C abgekühlt. Man gab 20 g Schwefel zu und tropfte unter Kühlung ein Gemisch aus 160 g Natriumhydroxid und 320 ml Wasser zu. Nach 1 Stunde Rühren trennte man die Toluolphase ab und extrahierte die wäßrige Phase noch einmal mit 300 ml Toluol. Die Toluolphasen wurden verworfen.

In die wäßrige Phase ließ man unter raschem Rühren bei 10 bis 20°C 257 g Schwefelmonochlorid tropfen. Man rührte noch 15 Minuten und gab dann 10 g Kaliumcarbonat zu. Nach 2-stündigem Rühren bei 10 bis 20°C erwärmte man auf 45 bis 50°C und trennte die entstandene Schmelze von der wäßrigen Phase, wusch noch einmal mit warmem Wasser und trocknete im Vakuum. Man erhielt 806 g gelbes Öl (= Bis-(diethoxy-thio-phosphoryl)-tetrasulfid).

Mischbeispiele:

1. 70 g flüssiges P-S$_4$ wurden in üblicher Weise mit g eines Pulvers (das aus 100 g Kieselsäure [1]) und 1 g Calciumhydroxid durch Vermischen in Wasser und anschließendem Trocknen im Vakuum - zuletzt bei 100°C im Vakuum - sowie nachfolgender Pulverisierung hergestellt wurde) vermischt. Nach etwa 10 Tagen Lagern bei Raumtemperatur war das P-S$_4$ nahezu völlig in P-S$_3$ überführt worden.

2. 70 g flüssiges P-S$_4$ wurden in üblicher Weise mit 30 g eines Pulvers (das aus 100 g aktiver gefällter Kieselsäure [2]) und 5 g Kaliumhydroxid durch Vermischen in Wasser und anschließendem Trocknen im Vakuum - zuletzt im Vakuum

[1] ®Sipernat 50 der Degussa AG, pH-Wert 6, spezifische Oberfläche 170 m²/g.

[2] ®Vulkasil S der Bayer AG

bei 100°C - sowie nachfolgender Pulverisierung hergestellt wurde) vermischt, wobei die Temperatur 30°C nicht überschritt. Nach etwa 10 Tagen Lagern bei Raumtemperatur war die Überführung des $P-S_4$ in $P-S_3$ abgelaufen.

3. 70 g flüssiges $P-S_4$ wurden in üblicher Weise mit 30 g eines Pulvers, das aus 100 g aktiver gefällter Kieselsäure[2]) und 3 g Natriumhydroxid durch Vermi schen in Wasser und anschließendem Trocknen im Vakuum - zuletzt im Vakuum bei 100°C - sowie nachfolgender Pulverisierung hergestellt wurde, vermischt, wobei die Temperatur) der Mischung unter 30°C gehalten wurde. Nach etwa 12 Tagen Lagern bei Raumtemperatur war die Überführung des $P-S_4$ in $P-S_3$ abgelaufen.

4. 780 g flüssiges $P-S_4$ wurden unter Rühren mit einem Pulvermischer unter Eisbad-Kühlung zu 335 g Natriumaluminiumsilikat (®Vulkasil Al) so schnell gegeben, daß die Temperatur 30°C nicht überschritt. Das erhaltene Pulver wurde bei Raumtemperatur gelagert. Nach 6 Tagen war die Umsetzung von $P-S_4$ zu $P-S_3$ quantitativ.

## Ansprüche

1.) Verfahren zur Herstellung von Bis(di-$C_1$-$C_6$-alkoxythiophosphoryl)-trisulfiden aus Bis(di-$C_1$-$C_6$-alkoxythiophosphoryl)-tetrasulfiden durch Schwefelabspaltung an Natriumaluminiumsilikat bzw. an mit Alkalihydroxid und/oder Erdalkalihydroxid behandeltem Füllstoff aus der Reihe Silikate, Ruß und Aluminiumoxid.

2.) Verfahren nach Anspruch 1 zur Herstellung von Bis(diethoxy-thiophosphoryl)-trisulfid aus Bis-(diethoxy-thiophosphoryl)-tetrasulfid.

3.) Verfahren nach Ansprüchen 1 und 2, wonach zur Behandlung von 100 g Füllstoff 0,1 bis 20 g Alkalihydroxid und/oder Erdalkalihydroxid eingesetzt worden sind.

4.) Verfahren nach Ansprüchen 1 und 2, wonach zur Behandlung von 100 g Füllstoff 0,2 bis 10 g Alkalihydroxid und/oder Erdalkalihydroxid eingesetzt worden sind.

5.) Verfahren nach Ansprüchen 1 und 2, wonach zur Behandlung von 100 g Füllstoff 0,5 bis 5 g Alkalihydroxid und/oder Erdalkalihydroxid eingesetzt worden sind.

6.) Verfahren nach Ansprüchen 1 bis 5, wonach Natrium-, Kalium- und/oder Calciumhydroxid zur Behandlung der Füllstoffe verwendet worden sind.

7.) Verfahren nach Ansprüchen 1 bis 6, wonach als Füllstoffe Calciumsilikat, Magnesiumsilikat, Aluminiumsilikat oder Siliciumdioxid verwendet worden sind.

8.) Verfahren nach Ansprüchen 1 und 2, wonach als Füllstoff Natriumaluminiumsilikat eingesetzt worden ist.

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
| A | SOVIET INVENTIONS ILLUSTRATED, Woche C48, 14. Januar 1981, Sektion Ch: Chemical, Zusammenfassung Nr. 85674 C/48, Derwent Publications Ltd, London, GB; & SU-A-644 306 (B.A. KHASKIN) 15-06-1980 * Zusammenfassung * | 1 | C 07 F 9/165 C 08 K 5/51 |
| D,A | DE-A-2 249 090 (ICI) * Insgesamt * | 1 | |
| | | | RECHERCHIERTE SACHGEBIETE (Int. Cl.5) |
| | | | C 07 F 9/00 |
| Der vorliegende Recherchenbericht wurde für alle Patentansprüche erstellt | | | |

| Recherchenort | Abschlußdatum der Recherche | Prüfer |
|---|---|---|
| DEN HAAG | 09-05-1990 | OUSSET J-B. |

EPO FORM 1503 03.82 (P0403)